# EUROPEAN PATENT APPLICATION

(11) **EP 3 503 368 A1**
(43) Date of publication of application: **26.06.2019**
(21) Application number: 17306882.6
(22) Date of filing: 21.12.2017
(51) Int. Cl.: H02M 1/42, H02M 3/335, H05B 33/08

(54) **POWER FACTOR CONTROL USING TIME VARIANT LOAD MANAGEMENT**

(71) Applicant: THOMSON LICENSING, 92130 Issy les Moulineaux (FR)
(72) Inventor: PRGOMET, Ivica, CH-8048 Zürich (CH); BISONTI, Fernando, CH-8048 Zürich (CH); KLAUENBÖSCH, Karin, CH-8048 Zürich (CH); TRIPOD, Luc, CH-8048 Zürich (CH); BISCHOF, Felix, CH-8048 Zürich (CH); KELLER, Tony, CH-8048 Zürich (CH); FILIPPOU, Evanelos, CH-8048 Zürich (CH)
(74) Representative: Huchet, Anne

(57) **Abstract**

The present disclosure describes a device such as a display device, comprising a power supply that uses temporal multiplexing of charging/supplying phases for a set of loads such as backlights. The multiplexing of the load is arranged so that the shape of the primary current is nearly sinusoidal for optimal power factor correction and so that the harmonics generated by the device on the mains are minimized. An algorithm determines a switching order of the plurality of loads over the plurality of switching periods by iterating over the switching periods and associating one of the loads to each of the switching period.

## Description

### TECHNICAL FIELD

The present disclosure relates to the domain of power supplies and more particularly to power supplies correcting for power factor.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art unless specifically expressed in the text or drawings.

Any line-powered apparatus that uses ac-dc power conversion generates some perturbations on the mains distribution network, including phase shifts and harmonic distortions. These perturbations come from the fact that the loads connected to the mains are not purely resistive. Some rectification loads, such as in power converters, may present non-linear loads to a source of AC power that distort the wave shape of the current drawn from the source thus inducing a phase shift and shape in the current absorbed. Moreover, the cumulated harmonic currents from multiple load devices create measurable losses as they're drawn from the source or generator, through miles of transmission and distribution lines, to the home or workplace. This topic is known as power factor correction. Power factor correction is generally needed when a load produces a phase shift between the voltage and current provided by an AC source. In multiple countries, regulatory rules impose the presence of some kind of power factor correction technique. This is the case for example in Europe for all devices consuming more than 75W.

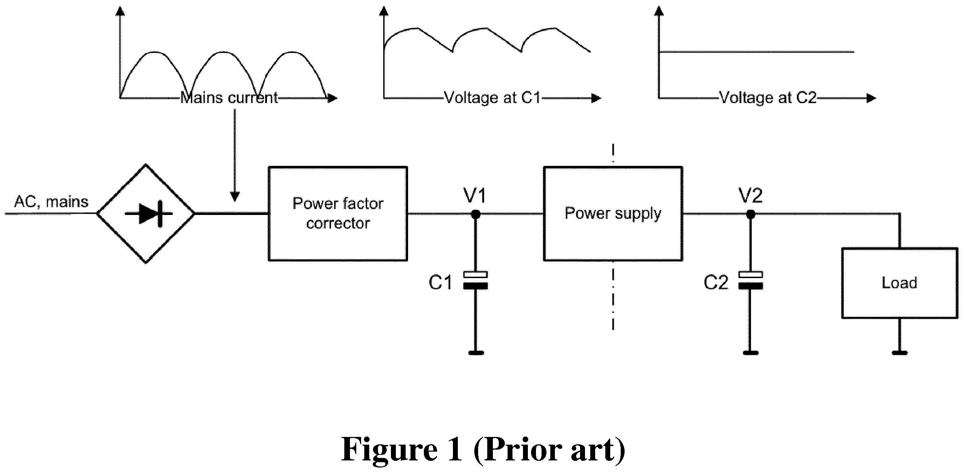

The diagram of figure 1 illustrates a prior art power factor correction that is conventionally integrated into televisions. In this diagram, the power factor is corrected by a two-stage power conversion comprising a pre-converter followed by a mains-separating ac-dc converter. The pre-converter conventionally uses a series inductor but such device is bulky, taking a lot of space in the device and can be heavy as well. Moreover, double conversion is power inefficient since the inefficiencies of each conversion multiplies thus leading to more power consumption that needed.

It can therefore be appreciated that there is a need for a power factor correction that addresses at least some of the problems of the prior art. The present disclosure provides such a solution.

### SUMMARY

The present disclosure describes a device such as a display device, comprising a power supply that uses temporal multiplexing of charging/supplying phases for a set of loads such as backlights. The multiplexing of the load is arranged so that the shape of the primary current is nearly sinusoidal for optimal power factor correction so that the harmonics generated by the device on the mains are minimized. An algorithm determines a switching order of the plurality of loads over the plurality of switching periods by iterating over the switching periods and associating one of the loads to each of the switching period.

In a first aspect, the disclosure is directed to a method for controlling the distribution of current to a plurality of loads over a plurality of switching periods determined according to a switching frequency, the method comprising: obtaining current needs for the plurality of loads for a period; determining a switching order of the plurality of loads over the plurality of switching periods so that the current distribution is shaped in a sinusoid form; and controlling, for the period, the distribution of current to the plurality of loads according to the switching order.
In a first variant of first aspect, determining the switching order further comprises: computing the sum of current needs for the plurality of loads for a period; determining a sinusoid for which the amount of current is identical to the sum of current needs for the plurality of loads; sampling the sinusoid according to the switching periods; select one switching period and one load, and comparing the current needs of the selected load to the sampled sinusoid value of the selected switching period, and: when the current needs of the selected load is greater than the sampled sinusoid value of the selected switching period, associate the selected load to the selected switching period and substract the sampled sinusoid value of the selected switching period from the current needs of the selected load; when the current needs of the selected load is equal to the sampled sinusoid value of the selected switching period, associate the selected load to the selected switching period, set the current needs of the selected load to zero and select next load; and when the current needs of the selected load is smaller than the sampled sinusoid value of the selected switching period, select next load. In a second variant of first aspect, the association further comprises: a preliminary step of reordering the switching periods according to decreasing values of the sampled sinusoid values and reordering the loads according to decreasing values of current needs of the loads; and a supplementary step of restoring the initial order values for the switching periods and the loads. In a third variant, the association between the switching periods and the loads is stored in an association table. In a fourth variant, the iteration over the switching periods is done in a random order. In a fifth variant, the selection of the load is done in a random order. In a sixth variant, empty cycles without any power transfer are fed near the zero crossing of the input voltage. In a seventh variant, at least one load is selected multiple times during a full cycle.

In a second aspect, the disclosure is directed to an electronic circuitry for distributing current to a plurality of loads comprising a controller configured to control a time-multiplexed switching cycle of a charging phase and a supplying phase, for each of the plurality of loads, wherein the order of the time-multiplexed switching cycle is determined according to the method of the first aspect. In a first variant, the electronic circuitry further comprises a pulse width modulation controller configured to switch a mains primary supply and control a supply phase and a charging phase according to the result of comparison between a primary current and a needed current. In a second variant the electronic circuitry further comprises a mains separator configured to provide information relative to the needed current from the controller to the pulse width modulation controller. In a third variant, the electronic circuitry further comprises a zero-crossing detector configured to synchronize the controller with the pulse width modulation controller.

In a third aspect, the disclosure is directed to a display device comprising the electronic circuitry according to second aspect wherein the plurality of loads comprises a plurality of light emitting components providing backlighting to a plurality of corresponding areas of the display.

Except when explicitly mentioned the variants may be combined.

### BRIEF DESCRIPTION OF DRAWINGS

Preferred features of the present disclosure will now be described, by way of non-limiting example, with reference to the accompanying drawings, in which:
Figure 1 illustrates a prior art power factor correction integrated into televisions;
Figure 2 illustrates an exemplary circuit diagram for a direct flyback conversion power supply for a LCD television according to a preferred embodiment of the disclosure;
Figure 3 illustrates an exemplary temporal diagram for a direct flyback conversion power supply, comprising a simple time-multiplexing mechanism;
Figure 4a illustrates an exemplary temporal diagram of the current consumption of a device according the simple time-multiplexing mechanism of figure 3;
Figure 4b illustrates an exemplary harmonic spectrum of the current consumption of a device according the simple time-multiplexing mechanism of figure 3;
Figure 4c illustrates an exemplary temporal diagram of the current consumption of a device according to an optimized time-multiplexing mechanism;
Figure 4d illustrates an exemplary harmonic spectrum of the current consumption of a device according the optimized time-multiplexing mechanism;
Figure 5 illustrates an exemplary method for the distribution of current to a plurality of loads according to an embodiment of the disclosure;
Figure 6a illustrates a first exemplary method for optimizing the time-multiplexing mechanism according to an embodiment of the disclosure;
Figure 6b illustrates a second exemplary method for optimizing the time-multiplexing mechanism according to the preferred embodiment of the disclosure;
Figure 7a illustrates an exemplary temporal diagram of the current consumption of a device according to an improvement of the optimized time-multiplexing mechanism;
Figure 7b illustrates an exemplary harmonic spectrum of the current consumption of a device according to the improvement the optimized time-multiplexing mechanism;

### DESCRIPTION OF EMBODIMENTS

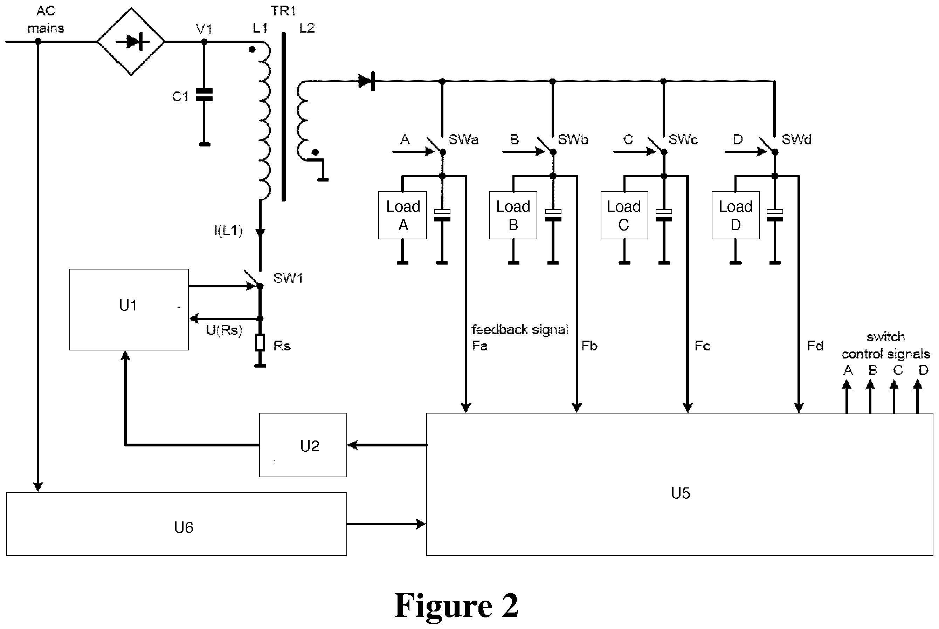

**Figure 2** illustrates an exemplary circuit diagram for a direct flyback conversion power supply for a LCD television according to a preferred embodiment of the disclosure. The electronic circuitry of the device requiring power supply is split into 4 groups defining the 4 loads A, B, C, D. The 4 groups are audio power, digital signal processing, peripheral backlighting and central backlighting. For supporting the idea of different loads it is considered that the backlight areas are of different size and thus require different amount of power.

Each of the group of loads is controlled by a corresponding switch (A, B, C, D in figure 1) and is supplied from a secondary winding L2 of transformer TR1. The transformer TR1 is coupled direct to the rectified mains. The circuit constitutes a flyback converter configurated to operate in a time-multiplexed mode under control of a switch SW1, using a two-phase process where the first phase is a charging phase and the second phase is a supplying phase. Transformer TR1 stores in the first winding L1 an amount of current during the first phase (SW1 closed, A, B, C, D open) and transfers this current to the secondary winding L2 during the second phase (SW1 open and one of A, B, C, D closed). The stored energy is proportional to the second power of the current: *E(L₁)* = *I(L1)² x L₁* / 2, the current being proportional to the time: *I(L1) = Tₒₙ x V₁* / *L₁.* Thus, the stored energy is controllable by U1 (a Pulse Width Modulation (PWM) modulator), L1 and V. By controlling the current in L1 (via measuring by series resistor Rs) the amount of energy becomes independent of V1. When the switch SW1 opens, this stored energy is transferred to the secondary side of the winding and to the load depending on switches A, B, C and D. The circuit obtains the desired amount of current for each of the loads, stores this current in L1 and transfers it to the appropriate load by means of a appropriate activation of the switches. Thus, the power supply is time-multiplexed for the different independent loads and draws its energy directly from a single transformer, without requiring an intermediary supply. With such a principle, the efficiency of the power supply can be maximized since there is no intermediate loss. The design of Figure 2 does not inherently address a power factor perturbation due to the switching of possibly non-linear loads.

The controller U5 obtains information on the current required for each of the load. The value of required current is provided to the PWM Modulator U1 through the mains separator U2 (for example an opto-coupler). In order to dispatch appropriately the current, a set of time slots are attributed to each group of loads. Each time slot comprises the two phases (charging and supplying) for one corresponding circuit (A, B, C, D), based on a Tₒₙ signal (not shown) generated by the PWM modulator U1, synchronized with the signals for switches A, B, C, D. The mains synchronization is performed according to a zero-crossing signal provided by a zero-crossing signal detector U6 through a mains separator such as an opto-coupler.

There are successive charging phases and supplying phases for each of the groups, together constituting one cycle and cycles are iterated continuously while the device is powered on. In a charging phase for one group, the switch SW1 is closed (ON) until the required charging current is accumulated in the first winding L1 and the switches A to D are opened (OFF). In a supplying phase for the group, the switch SW1 is opened and one of the switch corresponding to one of the group (A to D) is closed (ON) while the other ones stay open (OFF). When SW1 opens, a flyback voltage appears at the secondary winding L2 and the stored current is transferred to the secondary side of transformer TR1 into the respective load selected by the control signals A to D. This process goes from groups A to D so that the power supply needs of the loads are time multiplexed by Controller U5.

The AC voltage is rectified and C1 is of a value below 1uF. It does not serve as a reservoir but a filter. During low power standby the voltage at C1 is close to the rectified mains. Under load the voltage at C1 follows the sinusoidal shape. The transformer is energized periodically by U1 that drives SW1 and the loads are supplied in a time multiplexed mode from winding L2 of transformer TR1. The needed amount of current (or energy) is obtained by U5 and the control signal applied to U1 and sw1.

The load charging and supplying phase requires the collaboration between the controller U5 that obtains the needed current for each load and the PWM controller that switches the mains at high frequency for each of the load according to a level of needed current, the loads being switching on the secondary side by the controller U5, synchronized with the PWM controller through for example a zero-crossing detection circuit.

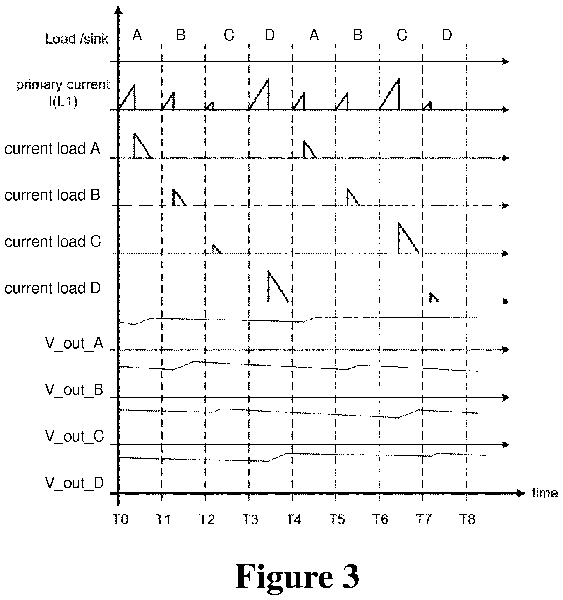

**Figure 3** illustrates an exemplary temporal diagram for a direct flyback conversion power supply, comprising a simple time-multiplexing mechanism. It is based on the circuit of figure 2 but uses a simple time-multiplexing that does not solve the issue of power factor correction. Two full cycles are shown, a first one from T0 to T4 and a second cycle from T4 to T8. Guard-time between the cycles is not shown but is required. A guard-time ensures that the discharge into one load is terminated before the next charge phase for the next load starts. This can be provided by time slots that are longer than the maximal charging time or by a variable timing controlled by supervising the discharge currents and waiting for complete discharge before switching to the next charge phase for the next group. Each cycle comprises 4 slots: one slot per load (A, B, C and D). The slots are identified by the group letter A to D in the first line. The second line shows the ramping up of the primary current I(L1). The 4 next lines illustrate the load current in the different loads (A to D) and in the 4 bottom lines the output voltages V_out_A to V_out_D driving the load.

In this figure, a single column comprises the two-phases charging and supplying phases mentioned earlier. The slot between T1 and T2 is related to group B. At that moment, the group B requires 40% of the maximal current. This value is converted into the corresponding duration for charging. The switch SW1 is closed (ON), all switches A, B, C, D are opened (OFF). Thus, the primary winding charges up according to a ramp-up current shown in third line (primary current I(L1)) of the diagram. When the charge reaches the desired value, the SW1 is opened (OFF) and the switch B is closed (ON). The charge is then transferred to the second winding and the group B is supplied with the current according to the supply current shown in fourth line (current load B). Similar to the charging, when the winding is discharged, the switch B is opened and the process continues with the next group.

The frequency of a complete cycle can be quite high compared to a conventional display refresh rate of 50 Hz. Power supply can be switched at typically 65 to 200 kHz. With those figures, a large number of loads can be addressed sequentially, or a smaller number repeatedly, during the display of a single image. As an example, a 200 kHz power supply switching provides 200000 charging cycles per second. When built into a receiver with a 50 Hz display refresh rate it can address 4000 loads during one TV-field. Alternatively, it can address a lower number of loads more frequently. With the example of figure 2, the 4 loads can be addressed 1000 times per display refresh.

The time-slots in Fig. 3 are drawn equidistant, given by a fixed frequency but an approach with a variable frequency and varying timeslots that matches the requested power works fine too. This Pulse width Modulation (PWM) demands a more complex current distribution by U6. The varying Pulse Width has to be foreseen for requesting the right power at the right moment for getting a good power factor correction.

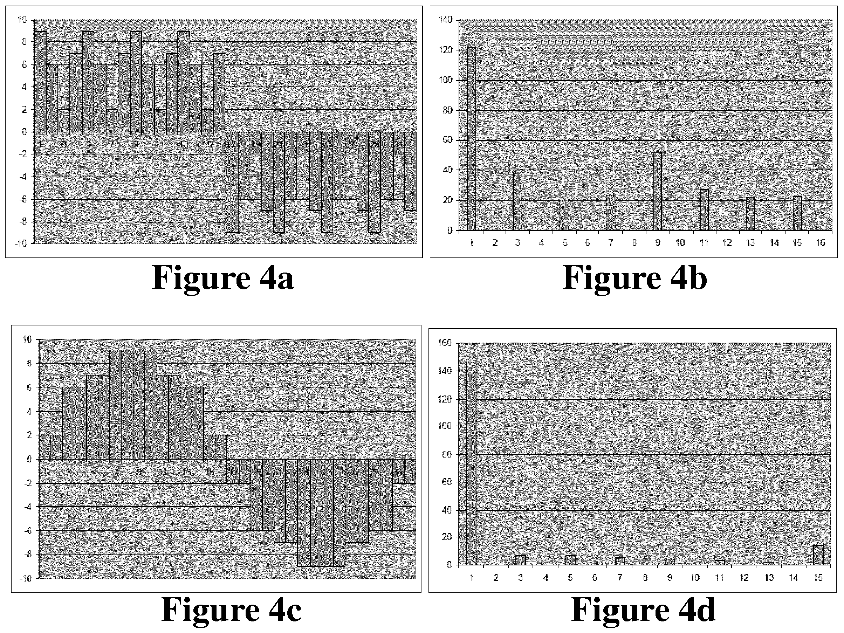

**Figure 4a** illustrates an exemplary temporal diagram of the current consumption of a device according the simple time-multiplexing mechanism of figure 3. The horizontal axis is the temporal axis, showing 32 charging-cycles are shown during one 50Hz cycle. This is equivalent to 1.6kHz. To avoid hearing the switching of the circuit, the switching frequency is above 50kHz but the number of elements to describe in a figure would be impractical so figure 4 depicts only 32 charging cycles. On the vertical axis, the diagram shows the primary current consumption as seen on the primary side of the transformer TR1, for these 32 charging cycles. With this simple time-multiplexing mechanism, the four loads are addressed sequentially (A, B, C, D) and therefore the cycle is repeated four times over a 50Hz half-cycle. The resulting current from the mains is anything but sinusoidal (50Hz) and far away from the power factor correction standards. **Figure 4b** illustrates an exemplary harmonic spectrum of the current consumption of a device according the simple time-multiplexing mechanism of figure 3. The harmonic spectrum displays strong harmonics that do not provide good features regarding power factor. Indeed, these harmonics could induce perturbation on the mains supply as mentioned in the introduction. Accordingly, Figures 4A and 4B represent an example of the problem to be solved when using a configuration, such as Figure 2, that merely performs load switching without considering the effect the power converter may have on power factor.

**Figure 4c** illustrates an exemplary temporal diagram of the current consumption of a device according to an optimized time-multiplexing mechanism. In this diagram again, only 32 charging-cycles are shown during one 50Hz cycle for the sake of simplicity and comparison. The time-multiplexing has been modified to reorder the addressing of the different loads with different current needs, leading to an optimized sequence that results in a nearly sinusoidal current distribution. Such a current distribution constitutes an excellent power factor correction since the load is seen as being purely resistive and does not induce any phase shifting. In this example, the addressing sequence to achieve such distribution for the loads is C C B B D D A A A A D D B B C C, etc. **Figure 4d** illustrates the corresponding harmonic spectrum. Thanks to the optimized reordering, the harmonic content of the spectrum is reduced dramatically. When the loads have constant current requirements, the optimization of the reordering does not need to be done frequently. When the loads have variable current requirements, the optimization of the reordering must be done frequently to ensure a correct current distribution. This is the case for example when the loads are related to different backlight areas for a LCD television and where the backlight areas are illuminated according to the brightness of the image displayed in the corresponding area. Thus, the current requirements for these loads may change as frequently as the image changes and therefore require continuous optimization of the load addressing.

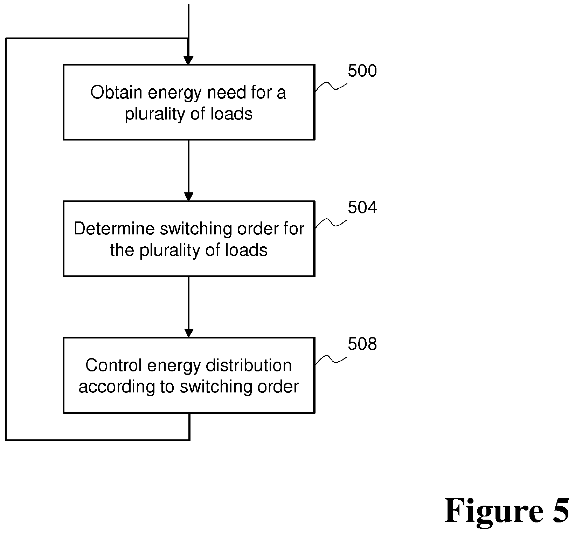

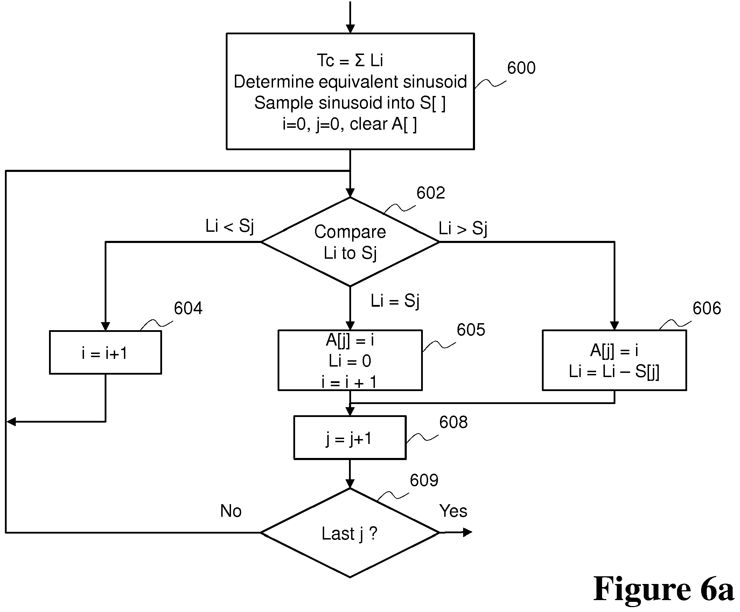

**Figure 5** illustrates an exemplary method for the distribution of current to a plurality of loads according to an embodiment of the disclosure. In step 500, current needs for the plurality of loads is obtained. In step 504, the switching order with the plurality of loads is determined using an algorithm such as the algorithm of figure 6a. In step 508, the current is distributed to the plurality of loads according to the order that has been determined by the algorithm. The loop iterates endlessly. When the current needs are quite stable, or at least do not change for each mains period, a waiting delay is inserted before a further iteration. The duration of this delay highly depends on the application, typically from 100ms to several seconds or minutes.

**Figure 6a** illustrates a first exemplary method for optimizing the time-multiplexing mechanism according to an embodiment of the disclosure. The objective of the algorithm is to address the different loads in an order chosen so that the difference between the corresponding current curve and an equivalent sinusoid is minimized so that it determines the switching order for the plurality of loads as mentioned in step 504 of figure 5. Thus, the algorithm builds an activation table *A[ ]* that stores the identifier of the load to be activated during each of the switching cycle of a complete period of the mains supply (50 or 60 Hz sinusoid). The size of the table corresponds to the number of activations per period, and thus depends on the switching frequency. The method may also operate on a half sinusoid and the activation order is repeated for the second half. The algorithm uses load requirements, such as current or energy (load needs), as inputs to be provided for the period for each of loads. This value is termed *Li* for the *i* loads (e.g. i from 0 to 9 when 10 loads are used). In step 600, the sum of the total current (or energy) for the period is computed, termed *Tc.* The equivalent sinusoid is determined so that the total energy (or current requirement or need) of such sinusoid is equal to *Tc.* This sinusoid is then sampled according to the switching frequency and the resulting values are stored in a table *S[ ]* of the same size than the table *A[ ]*. This table represents the optimal values of current distribution to be achieved for the complete period *Tc.* The algorithm then distributes the values of the set of *Li* values over the table to reproduce the values of the table *S[]*. In this first example method, this is done in iterations over each switching period j, sequentially according to the order of the switching period, by taking a fraction of the value of a selected *Li,* associating the corresponding load to this switching period (inserting the value *i* into the table *A[ ]*) and updating *Li* by subtracting the taken fraction.

In step 602, the remaining value of *Li* is compared to the value of *S[j].* The result of this comparison leads to the three following cases:
- if the remaining value of Li is greater than the value of *S[j]:* then a fraction of it can be used for this iteration of switching period j, leading to step 606. In this step, the activation table is updated with the value of i, thus indicating that for this iteration of switching period *j* the load *i* must be activated: *A[j]* = *i.* The value of the remaining current for load *i* is updated by subtracting the value of the sinusoid for this switching period *j: Li* = *Li* - *S[j].* Then the value of j is incremented, in step 608 and the iteration continues with the next switching period until all the switching periods have been treated, as tested in step 609.
- if the remaining value of *Li* is equal to the value of *S[j]*, then this means that all values of *Li* have been distributed and the next load should be taken into account. Thus, in step 605, the activation table is updated with the value of i, thus indicating that for this iteration of switching period *j* the load *i* must be activated:
   *A[j]* = *i,* the value of the remaining current for load *i* is set to zero and *i* is incremented.
- If the remaining value of *Li* is smaller than the value of *S[j]*, this means that another load should be used for this switching period since the current load *i* has lower needs that the value of the sinusoid. Thus, in step 604, *i* is increment. The increment is done modulo the size of the load so that it cycles through the loads from the last one to the first one.

In some case, this algorithm of figure 6A may not be able to distribute all values and cannot terminate, for example if only small values of loads are remaining and are smaller than the values of the sinusoid. To prevent this issue, a first solution is to use a random order for the iterations over the switching period *j*. This is done by replacing the incrementation step 608 of figure 6A by a step where the switching period to be treated is chosen randomly. Similarly, the selection of next load of steps 604 and 605 can also be done randomly. A second solution to prevent the non-termination issue is to introduce some margin in the total current requirements to determine the equivalent sinusoid, for example by increasing the Tc value by a certain percentage (5% or 10%). This allows for margin into the distribution iterations at the cost of slightly reduced harmonic performance.

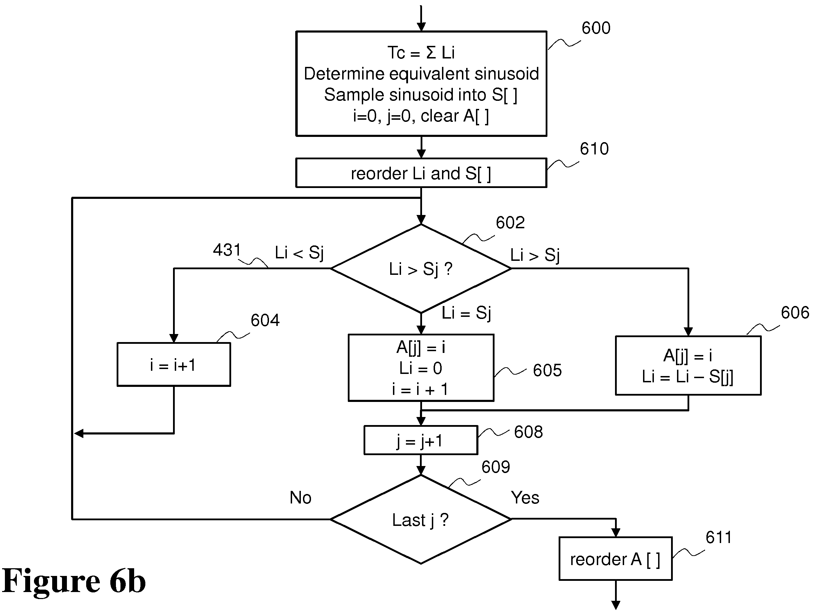

**Figure 6B** illustrates a second exemplary method for optimizing the time-multiplexing mechanism according to the preferred embodiment of the disclosure. The method is very similar to the algorithm of figure 6A, the difference being on the order of treatment. In this preferred embodiment, the distribution of the values of the loads is not done according to a sequential order but according to decreasing order of values of both the sinusoid (table *S[j]*) and the loads *Li.* Thus, the steps 600, 602, 604, 605, 606, 608, 609 are identical. An additional step 620 is performed at the initialisation. In this step, the table *S[j]*) and the loads *Li* are reordered according to decreasing values. For that purpose, temporary index tables may be used, both for *S[j]* and for *Li,* to store the reordering in order to be able to restore the order in step 621, once all values have been distributed. With this method of starting with the greatest values, the loads that require the most current requirements will be associated to the switching periods were the sinusoid is maximal while the load with less current needs will be associated to the switching period at the beginning and the end of the sinusoid, where the levels are lower. This method ensures the termination of the algorithm.

The person skilled in the art will appreciate that with the optimization methods of figures 6A and 6B, one load can be addressed multiple times during a full cycle. Other algorithms may be used to solve the distribution of the loads over the switching period such as matching pursuit, forward-backward pursuit, upper confidence bound sampling or greedy algorithms.

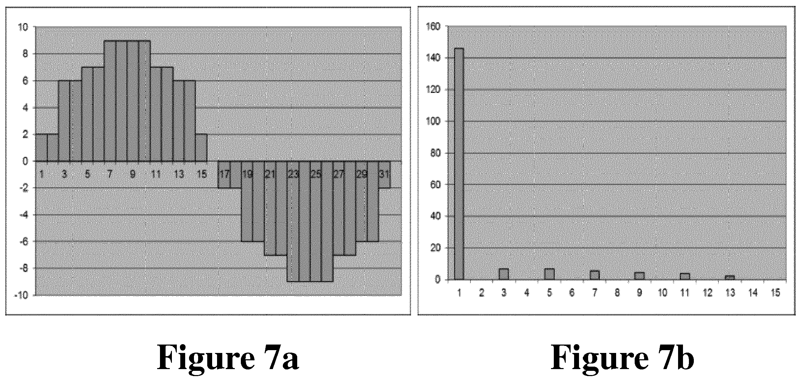

In another embodiment, the frequency of switching is variable and chosen so that the optimization leads to good results.**Figure 7A** illustrates an exemplary temporal diagram of the current consumption of a device according to a first improvement of the optimized time-multiplexing mechanism. In an alternate embodiment, "empty cycles" (or a dead-zone) are fed near the zero crossing of the input voltage without any power transfer (primary current is null). This has a beneficial impact on the spectral curve, as shown in **Figure 7B****.**

Although the description above is targeting LCD television or monitors using LED backlight technology, the principles apply to other type of devices such as OLED display devices, multi-channel audio amplifiers, electric heaters, etc.

## Claims

1. A method for controlling the distribution of current to a plurality of loads over a plurality of switching periods determined according to a switching frequency, the method comprising:
- obtaining (500) current needs for the plurality of loads for a period;
- determining (504) a switching order of the plurality of loads over the plurality of switching periods so that the current distribution is shaped like a sinusoid; and
- controlling (508), for the period, the distribution of current to the plurality of loads according to the switching order.

2. The method of claim 1 wherein determining the switching order further comprises:
- computing (600) the sum of current needs for the plurality of loads for a period;
- determining (600) a sinusoid for which the amount of current is identical to the sum of current needs for the plurality of loads;
- sampling (600) the sinusoid according to the switching periods;
- select one switching period and one load (609), and
- comparing (602) the current needs of the selected load to the sampled sinusoid value of the selected switching period, and:
- when the current needs of the selected load is greater than the sampled sinusoid value of the selected switching period, associate (606) the selected load to the selected switching period and substract the sampled sinusoid value of the selected switching period from the current needs of the selected load;
- when the current needs of the selected load is equal to the sampled sinusoid value of the selected switching period, associate (605) the selected load to the selected switching period, set the current needs of the selected load to zero and select next load; and
- when the current needs of the selected load is smaller than the sampled sinusoid value of the selected switching period, select next load (604);

3. The method of claim 2 wherein the association further comprises:
- a preliminary step (610) of reordering the switching periods according to decreasing values of the sampled sinusoid values and reordering the loads according to decreasing values of current needs of the loads;
- a supplementary step (611) of restoring the initial order values for the switching periods and the loads.

4. The method of any of claims 1 to 3 wherein the association between the switching periods and the loads is stored in an association table.

5. The method of any of claims 1 to 4 wherein the iteration over the switching periods is done in a random order.

6. The method of any of claims 1 to 5 wherein the selection of the load is done in a random order.

7. The method of any of claims 1 to 5 wherein empty cycles without any power transfer are fed near the zero crossing of the input voltage.

8. The method of any of claims 1 to 5 wherein at least one load is selected multiple times during a full cycle.

9. An electronic circuitry for distributing current to a plurality of loads comprising a controller (U5) configured to control a time-multiplexed switching cycle of a charging phase and a supplying phase, for each of the plurality of loads, wherein the order of the time-multiplexed switching cycle is determined according to any of claims 1 to 6.

10. The electronic circuitry of claim 9 further comprising
- a pulse width modulation controller (U1) configured to switch a mains primary supply and control a supply phase and a charging phase according to the result of comparison between a primary current and a needed current.

11. The electronic circuitry of claim 10 further comprising a mains separator (U2) configured to provide information relative to the needed current from the controller (U5) to the pulse width modulation controller (U1).

12. The electronic circuitry of claim 10 further comprising a zero-crossing detector (U6) configured to synchronize the controller (U5) with the pulse width modulation controller (U1).

13. A display device comprising the electronic circuitry according to any of claims 9 to 12 wherein the plurality of loads comprises a plurality of light emitting components providing backlighting to a plurality of corresponding areas of the display.
